Europäisches Patentamt

European Patent Office

Office européen des brevets

(11) Numéro de publication : **0 330 593 B1**

# (12) FASCICULE DE BREVET EUROPEEN

(45) Date de publication du fascicule du brevet :
**29.04.92 Bulletin 92/18**

(51) Int. Cl.⁵ : **A22B 5/20,** A22B 5/00

(21) Numéro de dépôt : **89420067.4**

(22) Date de dépôt : **22.02.89**

(54) **Procédé et machine pour arracher les pannes d'un porc abattu.**

(30) Priorité : **23.02.88 FR 8802436**

(43) Date de publication de la demande :
**30.08.89 Bulletin 89/35**

(45) Mention de la délivrance du brevet :
**29.04.92 Bulletin 92/18**

(84) Etats contractants désignés :
**AT BE CH DE ES GB IT LI LU NL SE**

(56) Documents cités :
**EP-A- 0 102 337
EP-A- 0 245 183
FR-A- 2 551 950
FR-A- 2 597 721
US-A- 3 916 484
US-A- 4 667 371**

(73) Titulaire : **Société Anonyme : SOCIETE DES ATELIERS DE CONSTRUCTIONS MECANIQUES: LUCIEN DURAND Quartier des Buis BAIX F-07210 Chomerac (FR)**

(72) Inventeur : **Durand, Lucien Avenue de la Gare Baix F-07210 Chomerac (FR)**

(74) Mandataire : **Ropital-Bonvarlet, Claude Cabinet BEAU DE LOMENIE, 51, avenue Jean-Jaurès F-69007 Lyon (FR)**

EP 0 330 593 B1

# Description

La présente invention concerne le domaine de l'abattage industriel des porcs et elle vise, plus particulièrement, l'exécution d'opérations de préparation qui suivent cet abattage.

L'objet de l'invention concerne, plus spécialement, la phase de préparation au cours de laquelle, après abattage et éviscération, on procède à l'arrachement ou au décollement de deux amas graisseux tapissant les faces internes des flancs du porc, amas graisseux qui sont, habituellement, dénommés "pannes".

Un procédé connu pour décoller et arracher de telles pannes consiste, selon le brevet **FR-2 597 721**, à suspendre par les pattes arrière un porc abattu et éviscéré, à introduire, dans la cage thoracique ouverte du porc, une pince comportant des mâchoires à mors actifs orientées vers l'extérieur, à placer les mors actifs sensiblement dans le plan des extrémités inférieures des pannes tapissant les faces intérieures des flancs du porc, à ouvrir la pince pour appliquer les mors actifs contre les extrémités inférieures des pannes, à presser contre les faces externes des flancs du porc des contre-mors passifs en regard des mors actifs, à faire sortir des mors actifs des moyens de préhension pour saisir les pannes simultanément, à ouvrir les contre-mors passifs, à fermer la pince pour rapprocher les mors actifs et arracher les extrémités inférieures des pannes saisies par les moyens de préhension et à élever la pince pour décoller les pannes des faces intérieures des flancs du porc duquel la pince est ensuite extraite.

Ce brevet vise, également, une machine pour mettre en oeuvre le procédé ci-dessus, une telle machine comprenant une structure porteuse déplaçable verticalement par un moteur sur des glissières de support et de guidage d'un bâti, un châssis porté par la structure, déplaçable horizontalement par un moteur et formant un pivot vertical, et une pince à deux branches montée sur le pivot.

Le procédé et la machine selon ce brevet donnent satisfaction pour la fonction de préhension, d'arrachement et de décollement des pannes.

La mise en oeuvre pratique a, toutefois, permis de constater que l'asservissement du fonctionnement automatique de la machine pour mettre en oeuvre le procédé posait un problème non encore résolu résultant de la succession, dans une chaîne d'abattage automatique industrielle, de porcs présentant des morphologies, des tailles, ainsi que des hauteurs suspendues différentes.

Pour que le fonctionnement automatique puisse intervenir avec toute satisfaction, il importe de pouvoir saisir les pannes à proximité de la partie inférieure de ces dernières. Or, la situation dans le plan horizontal de ces parties inférieures peut admettre des variations notables attachées à la morphologie et à la taille des porcs.

Dans une chaîne d'abattage industrielle, il peut arriver que des différences de tailles de porcs suspendus puissent être rencontrées entre 1 500 mm et 2 200 mm.

De telles différences ne permettent pas de définir un plan de préhension et d'arrachement commun à tous les porcs susceptibles de se présenter et, par suite, le fonctionnement de la machine et la mise en oeuvre du procédé sont, parfois, d'une efficacité aléatoire.

L'objet de la présente invention est de résoudre ce problème en proposant des perfectionnements apportés aux moyens connus et visant à permettre, de façon entièrement automatique, la détermination d'un plan de référence correspondant aux parties inférieures des pannes à saisir, arracher et décoller, quelles que soient la morphologie et la hauteur suspendue des porcs se présentant successivement, à poste fixe ou en cheminement continu, devant la machine à arracher les pannes.

Pour atteindre l'objectif ci-dessus, la présente invention a pour objet un procédé consistant à suspendre, par un palonnier engagé dans les tendons d'Achille des pattes arrière, un porc abattu et éviscéré, à introduire dans la cage thoracique ouverte du porc une pince comportant des mâchoires à mors actifs orientés vers l'extérieur, à placer les mors actifs sensiblement dans le plan des extrémités inférieures des pannes tapissant les faces internes des flancs du porc, en vue de saisir ces extrémités pour les arracher, puis à élever la pince pour décoller les pannes, caractérisé en ce que, pour définir le plan des extrémités inférieures des pannes, il consiste à :

– déterminer la mesure verticale du porc suspendu entre un plan horizontal passant par le palonnier engagé dans les tendons d'Achille et un plan horizontal passant par l'extrémité du groin du porc,

– à disposer la pince à une hauteur comprise entre 700 mm et 900 mm à partir du plan passant par l'extrémité du groin du porc et en fonction de la mesure verticale du porc suspendu.

La présente invention a, également, pour objet une machine pour arracher les pannes d'un porc abattu et suspendu, du type comprenant une structure porteuse déplaçable verticalement par un moteur sur des glissières de support et de guidage d'un bâti, un châssis porté par la structure porteuse, déplaçable horizontalement par un moteur et portant un pivot vertical sur lequel est montée une pince comportant deux mâchoires parallèles se présentant sous la forme d'une tête de pénétration apte à pouvoir être introduite entre les lèvres de l'ouverture thoracique d'un porc suspendu pour en saisir et arracher les pannes tapissant les faces internes des flancs du porc et un détecteur d'un plan approximatif passant par la base des pannes pour arrêter le déplacement vertical de la structure porteuse, machine caractérisée en ce que le détecteur est du type optique et comprend une cellule émettrice montée sur la structure porteuse et un ensemble optique récepteur agencé de façon que le porc puisse être suspendu devant lui, de manière à apprécier la hauteur du porc suspendu, entre un plan de référence passant par le palonnier de suspension du porc et un plan passant par l'extrémité du groin dudit porc, ledit détecteur étant relié à une centrale d'asservissement agencé de manière à arrêter le déplacement vertical de la structure porteuse pour disposer la tête de pénétration à une hauteur comprise entre 700 mm et 900 mm au-dessus du plan passant par l'extrémité du groin du porc en fonction de la hauteur du porc suspendu.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une élévation schématique illustrant le procédé et la machine selon l'invention.

La **fig. 2** est une élévation schématique mettant en évidence les critères de détermination devant être respectés pour la mise en oeuvre du procédé.

La **fig. 3** est une vue schématique illustrant une variante de réalisation de la machine selon l'invention.

Le domaine technique concerné est celui de l'abattage industriel de porcs P qui, après l'abattage proprement dit, sont suspendus par les pattes arrière et par l'intermédiaire d'un palonnier 1 à un convoyeur 2 les entraînant en défilement continu ou pas à pas devant des postes ou stations d'intervention.

Après abattage, les porcs P sont échaudés, épilés, flambés, brossés, puis éviscérés, c'est-à-dire qu'ils sont ouverts le long de la face ventrale abdominale, ainsi que le long de la cage thoracique, de manière à ménager un accès pour l'extraction des viscères et des abats. Après cette opération, les porcs P sont amenés, successivement, par le convoyeur 2 face à un poste I où se déroulent l'arrachement et le décollement des deux pannes p qui sont constituées par des amas graisseux tapissant les faces internes des flancs 3 ouverts du porc P. De telles pannes p s'étendent, généralement, depuis un niveau inférieur correspondant sensiblement à la deuxième tétine avant jusque, sensiblement, la moitié de l'abdomen.

L'objet de l'invention vise à réaliser l'arrachement et le décollement des deux pannes, de façon automatique et sans intervention manuelle, après une préhension certaine des parties inférieures des pannes, quelle que soit la morphologie du porc.

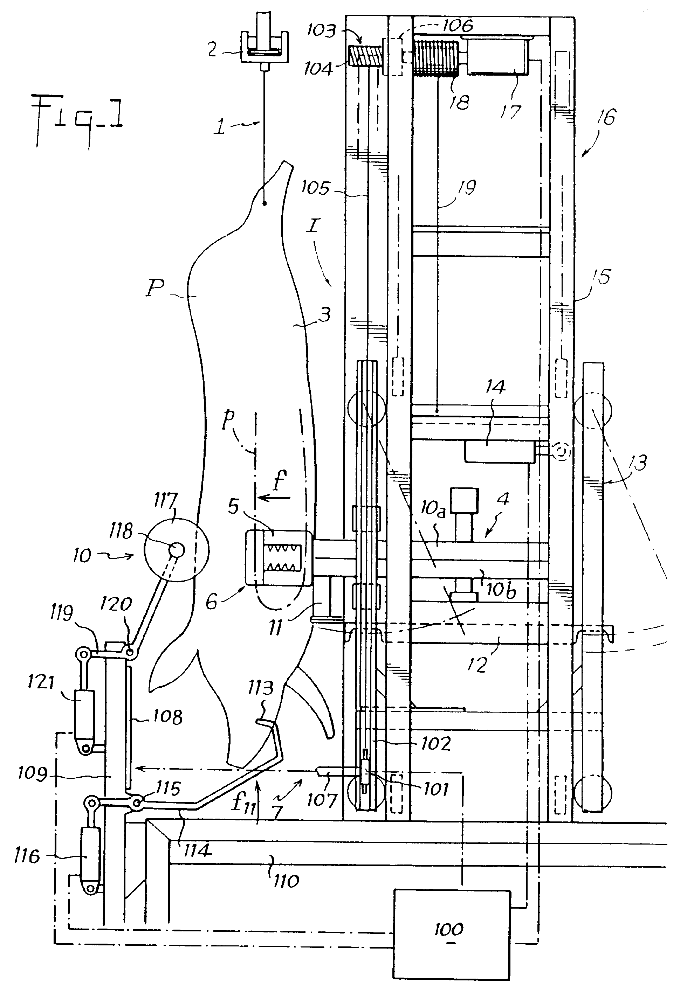

A cette fin, comme cela apparaît à la **fig. 1,** l'invention consiste à présenter, face à l'ouverture thoracico-abdominale d'un porc P suspendu par les pattes arrière, abattu et éviscéré, une pince 4 comportant deux mâchoires parallèles 5 conformées de manière à se présenter sous la forme d'une tête de pénétration 6 apte à pouvoir être introduite entre les lèvres de l'ouverture. La pince 4 a ceci de particulier qu'elle comporte des mâchoires 5, dites à mors actifs à partir de leurs faces latérales extérieures opposées.

Une seconde phase du procédé consiste à introduire la tête 6 à l'intérieur du porc, comme illustré par la fléche f et à amener cette tête 6 sensiblement dans le plan horizontal des parties terminales inférieures des pannes p, c'est-à-dire au voisinage des deuxièmes tétines avant.

L'arrêt de la tête 6 dans la position requise est apprécié de façon automatique par l'intermédiaire d'un détecteur 7.

Selon une autre phase du procédé, la pince 4 est commandée pour ouvrir les mâchoires 5 qui sont écartées l'une de l'autre à l'intérieur de la carcasse, de manière à être plaquées contre les parties terminales inférieures des pannes p.

Selon une autre phase du procédé, les mâchoires 5 sont commandées pour saisir, par l'intermédiaire des mors actifs, les extrémités inférieures des pannes p.

Lorsque les mors actifs ou moyens de préhension ont saisi les pannes, les mâchoires 5 sont ramenées l'une contre l'autre, ce qui produit l'arrachement des parties terminales des pannes p par rapport aux faces internes des flancs 3.

Une phase subséquente du procédé consiste alors à déplacer la pince 4 selon un mouvement ascendant, depuis la position de référence horizontale basse initiale. Ce déplacement produit, par conséquent, le décollement progressif des pannes p entraînées par les mâchoires 5 à partir de leurs extrémités inférieures saisies par ces dernières. Les pannes p sont donc ainsi progressivement décollées jusqu'à ce que les mâchoires 5 atteignent une position d'élévation maximale où les mors sont ouverts pour lâcher les pannes avant extraction de la tête 6.

Les différentes phases ci-dessus peuvent se dérouler successivement à poste fixe, c'est-à-dire lorsque le porc P est amené, puis immobilisé, face au poste I, ou à poste volant lorsque le porc P est entraîné en défilement constant. Dans un tel cas, les différents mouvements imposés à la pince 4 sont combinés avec une translation concomittante de même vitesse et de même sens que le défilement imposé au porc P par le convoyeur 2.

Dans les deux cas, la phase d'introduction de la tête de pénétration 6 à partir de la base de l'ouverture thoracique est, de préférence, conduite en prévoyant de disposer le porc P contre un appui dorsal 10 s'opposant au balancement ou déplacement du porc P lors de l'introduction de la tête 6.

Pour la mise en oeuvre du procédé ci-dessus, la pince 4 comprend deux branches 10a et 10b qui sont montées articulées sur un pivot vertical 11 porté par un châssis 12 monté sur une structure porteuse 13. Le châssis 12 peut être déplacé relativement par un organe moteur approprié **14** dans le sens de la flèche **f** à partir de la position de repos illustrée par la **fig. 1.** Dans l'exemple illustré schématiquement, la liaison, entre le châssis et la structure **13**, est du type pendulaire. Il doit être compris que toute autre adaptation peut être envisagée pour accomplir la même fonction.

La structure porteuse **13** est montée mobile verticalement sur des glissières de guidage **15** formées par un bâti **16** faisant face au convoyeur **2** en étant intégré à une chaîne d'abattage industriel. La structure porteuse **13** peut être déplacée verticalement selon un mouvement ascendant ou descendant par l'intermédiaire d'un organe moteur **17** incluant, par exemple, un tambour **18** d'enroulement-déroulement d'un cable de suspension **19** ou analogue accroché à la partie supérieure de la structure **13**.

Le fonctionnement séquentiel de la pince **4** et des organes moteurs **14** et **17** est placé sous la dépendance d'une centrale d'asservissement **100** permettant de régler, relativement et sélectivement, le début et l'arrêt de fonctionnement de chacun des organes moteurs, que ces derniers soient hydrauliques, pneumatiques ou électriques. Dans ce sens, la centrale **100** doit être considérée comme relevant de la technique antérieure sans relation directe avec l'objet de l'invention. Pour cette raison, la centrale **100** n'est pas décrite plus avant, pas plus que la pince **4** dont la structure est révélée en détail par la demande de brevet principal.

La présente invention part de la constatation d'une grande variété de caractéristiques morphologiques présentées par les porcs **P** dans une chaîne d'abattage industriel, généralement alimentée par des populations de races diverses et d'élevages différents

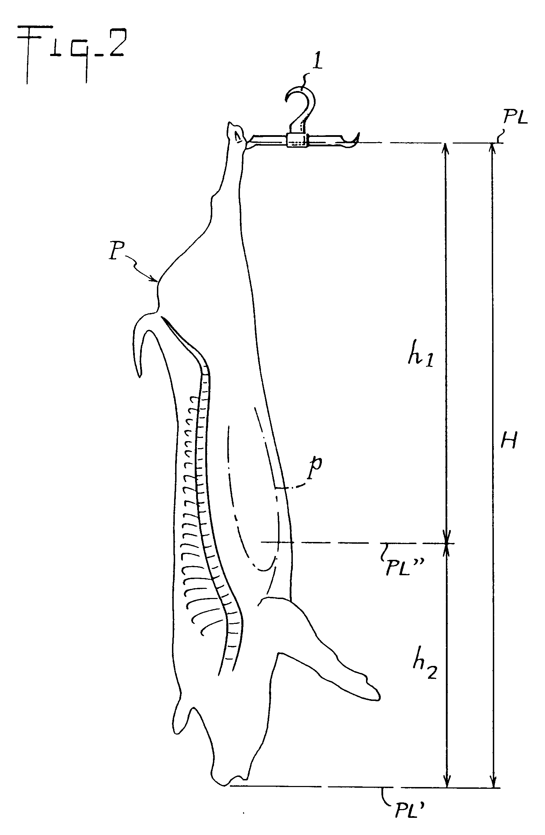

La **fig. 2** montre schématiquement les caractéristiques morphologiques devant être prises en compte pour rendre possible un fonctionnement automatique de la machine pour la mise en oeuvre du procédé ci-dessus, à partir d'une préhension certaine des parties terminales inférieures des pannes **p,** quelle que soit la morphologie des porcs se succédant aux postes d'intervention.

Les expériences ont permis de considérer que, sur la base d'une hauteur **H** d'un porc prise entre un plan de référence horizontal supérieur **PL** correspondant au palonnier engagé dans les pattes arrière du porc et un plan **PL'** horizontal passant par le groin de ce dernier, il était possible, proportionnellement, de déterminer la mesure des hauteurs $h_1$ et $h_2$ comprise respectivement entre un plan fictif **PL″** situant les extrémités inférieures des pannes **p** du porc et, d'une part, le plan **PL** et, d'autre part, le plan **PL'**. Les mesures expérimentales qui ont été relevées de façon statistique, permettent de considérer que le plan fictif **PL″** se situe par rapport au plan **PL'** à une hauteur $h_2$ comprise entre 700 mm et 900 mm.

De manière à pouvoir respecter pratiquement la condition ci-dessus dans la mise en oeuvre du procédé et amener, de façon certaine, les mors actifs de la tête **6** sensiblement dans le plan de référence **PL″**, le procédé de l'invention consiste à déterminer la hauteur **H**, puis à placer la tête **6** sensiblement dans le plan **PL″** après détermination de la hauteur $h_2$.

Selon l'invention, cette détermination est effectuée par un détecteur **7**, du type optique, qui est porté par la structure **12** tout en étant mobile relativement à cette dernière.

Dans un procédé de mise en oeuvre préféré, le détecteur optique **7** est monté sur un chariot **101** qui est guidé en coulissement sur une glissière **102** portée par la structure **13**, de façon à s'étendre parallèlement aux glissières de guidage **15** du bâti **16**. Le chariot **101** est lié à un organe moteur **103** chargé de l'animer d'une vitesse de déplacement selon un mouvement rectiligne alternatif en synchronisme avec le déplacement de la structure **13** sur les glissières **15**. Le déplacement en synchronisme est prévu de manière que le chariot **101** soit animé, au moins lors de la phase de descente, à partir de la position haute de référence illustrée en traits mixtes à la **fig. 1**, d'une vitesse proportionnellement supérieure d'environ 16/9 à la vitesse de déplacement de la structure **13** commandée par le moteur **17**. Cette vitesse proportiellement supérieure peut être générée par un organe moteur indépendant ou, encore, par l'organe moteur **17** en prévoyant, par exemple, un tambour **104** pour l'enroulement ou le déroulement d'un câble **105** auquel le chariot **101** est accroché. Le rapport de vitesse proportionnellement supérieure peut être établi entre le tambour **104** et le tambour **18**, soit par un multiplicateur **106**, soit en choisissant convenablement le rapport de diamètre entre ces deux tambours.

Le détecteur optique **7** comprend une cellule émettrice **107** qui est reliée à la centrale **100**. La cellule **107** est dirigée pour émettre un faisceau lumineux en direction d'une surface réfléchissante **108** qui est portée par un montant **109** s'élevant à partir de la base **110** du bâti **16**. Le montant **109** est disposé de manière qu'un porc **P**, déplacé par le convoyeur **2**, soit amené à poste fixe ou volant à passer devant la surface réfléchissante **108**, vis-à-vis de laquelle le groin du porc constitue un masque pour la cellule **107** tant que celle-ci n'occupe pas un niveau suffisamment bas pour que le faisceau qu'elle émet puisse être dirigé sur la surface réfléchissante **108**.

Les moyens selon l'invention, tels que décrits ci-dessus, fonctionnent de la façon suivante.

A supposer qu'un porc **P** soit amené en état stabilisé contre l'appui dorsal **10** face au poste I, le cycle débute par la commande de l'alimentation du moteur **17** par l'intermédiaire de la centrale **100** détectant la présence du porc **P**. Le moteur **17** commande le déplacement descendant de la structure porteuse **13** à partir de la position haute, telle que représentée en traits mixtes à la **fig. 1**. La structure **13** descend à une vitesse donnée en entraînant avec elle la pince **6** occupant sa position rétractée illustrée par la position en traits mixtes du châssis **12** commandé par le moteur **14**.

Simultanément, le chariot **101** est déplacé en course descendante sur les rails **102** portés par la structure **13**. Le déplacement de la cellule **7** s'effectue comme dit précédemment.

Tant que la cellule émettrice **107** défile devant le porc **P** qui occulte son faisceau lumineux, la centrale **100** maintient l'alimentation du moteur **17**. Dès que la cellule **107** émet un faisceau lumineux atteignant la surface réfléchissante **108**, la centrale **100** est commandée pour arrêter l'alimentation du moteur **17** et immobiliser, ainsi, la cellule **107** sur la structure **13** et cette dernière sur le bâti **16** dans une position dans laquelle la tête **6** se situe, sensiblement, sur le plan horizontal **PL″**.

Dans cet état, la centrale **100** commande, ensuite, le moteur **14** pour provoquer le déplacement dans le sens de la flèche **f** du châssis **12** et assurer la pénétration de la tête **6** à l'intérieur de la cage thoracique du porc suspendu **P**.

Un fonctionnement de la pince **4** peut, alors, intervenir comme il est connu, avec certitude que les mors actifs de la tête **6** seront à même de saisir les parties terminales inférieures des pannes **p** pour en provoquer l'arrachement dés la fermeture de la pince **4**. Cette fermeture commande l'inversion du cycle par l'intermédiaire de la centrale **100** assurant l'alimentation du moteur **17** dans le sens inverse pour provoquer la remontée de la structure **13** et, simultanément, celle de la cellule **7**. Au cours de cette phase, les mâchoires de la pince **4** provoquent le décollement des pannes **p** qui ont été saisies de façon sûre, à l'endroit convenable, par la détermination du plan **PL″** le plus favorable.

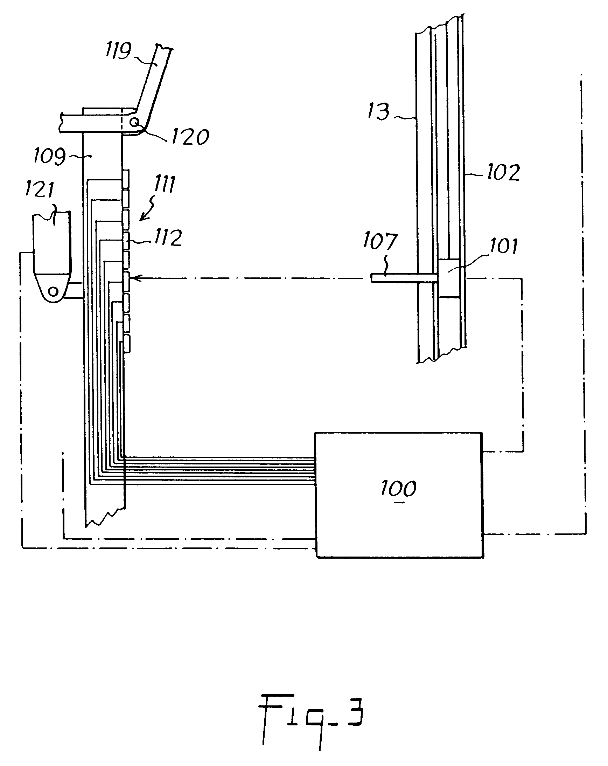

Dans une variante de réalisation illustrée par la **fig. 3**, la contrepartie **108** de la cellule émettrice **107** est constituée par une batterie **111** de capteurs **112** optiques, étagés verticalement sur le montant **109** et reliés, respectivement, à la centrale **100** à laquelle ils fournissent chacun une information électrique, dès que le faisceau lumineux de la cellule émettrice les atteint.

La détermination du plan de référence **PL″** apparaît un facteur particulièrement important pour permettre la mise en oeuvre du procédé selon un fonctionnement automatique dès qu'un porc **P** se présente au poste **I**.

Il a, toutefois, été constaté qu'il convenait, aussi, de prendre d'autres dispositions pour que la préhension ou la saisie des parties terminales inférieures des pannes **p** puisse intervenir avec certitude et être maintenue lors de la phase de décollement par déplacement ascendant de la structure **13**. Un autre facteur devant être pris en considération est l'immobilisation ferme du porc **P** pour éviter toute tendance au déplacement ascendant éventuel ou au balancement de la partie terminale inférieure, généralement constituée par la tête.

Pour atteindre cet objectif, l'invention prévoit de mettre en oeuvre une phase d'immobilisation de la partie inférieure du porc dés que la cellule **7** a détecté la présence du plan de référence **PL′**. Cette immobilisation est assurée par l'intermédiaire d'une main **113** adaptée en bout d'un bras **114** monté pivotant sur un axe **115** porté par le montant **109**. Le bras **114** est relié à un vérin **116** dont l'alimentation est contrôlée par la centrale **100**. Dés que la cellule **107** fournit une information de correspondance avec le plan **PL′** à la centrale **100**, celle-ci commande l'alimentation du vérin **116** faisant pivoter le bras dans le sens de la flèche $f_{11}$, de manière à engager la main **113**, de préférence, derrière le maxillaire inférieur pour solliciter en traction le porc **P** sur le palonnier **1** et, en même temps, forcer ce porc **P** contre l'appui dorsal **10**.

Dans cette position, l'action des mors actifs de la pince **4** peut intervenir avec l'efficacité maximale.

L'ouverture du bras **114**, en vue de libérer la partie inférieure du porc **P**, est commandée par la centrale **100** dés avant la phase du cycle correspondant au retour du châssis **12** dans la position de dégagement de la pince **4**. Le vérin **116**, par rappel élastique ou alimentation inverse, ramène alors la main **113** dans la position d'effacement.

Selon un développement de l'invention, il est également prévu de constituer l'appui dorsal **10** sous la forme d'un train de galets **117**, par exemple en forme de diabolo, monté sur un axe **118** porté par un levier **119** monté articulé sur un axe **120** solidaire du montant **109**. Le levier **119** est attelé à un organe moteur, tel qu'un vérin **121** susceptible de commander, soit l'effacement du diabolo **117**, soit son déplacement, en vue de coopérer avec l'épine dorsale du porc **P**. Le vérin **121** est contrôlé en alimentation par l'intermédiaire de la centrale **100** initiée, dans un tel cas, par un détecteur de passage ou de présence d'un porc **P** face au poste **I**.

L'invention n'est pas limitée aux exemples décrits et représentés, car diverses modifications peuvent y être apportées sans sortir de son cadre. En particulier, il pourrait être prévu de réaliser un montant **109** télescopique permettant d'adapter plusieurs gammes ou plages de réglage en fonction des variations de la hauteur **H**.

## Revendications

1. Procédé pour arracher les pannes d'un porc consistant à suspendre, par un palonnier (**1**) engagé dans les tendons d'Achille des pattes arrière, un porc (**P**) abattu et éviscéré, à introduire, dans la cage thoracique ouverte du porc (**P**), une pince (**4**) comportant des mâchoires (**5**) à mors actifs orientés vers l'extérieur, à placer les mors actifs sensiblement dans le plan des extrémités inférieures des pannes (p) tapissant les faces internes des flancs (3) du porc (P), en vue de saisir ces extrémités pour les arracher, puis à élever la pince (4) pour décoller les pannes (p), caractérisé en ce que pour définir le plan des extrémités inférieures des pannes (p), il consiste à : déterminer la mesure verticale (H) du porc suspendu entre un plan horizontal (PL) passant par le palonnier (1) engagé dans les tendons d'Achille et un plan horizontal (PL') passant par l'extrémité du groin du porc, à disposer la pince (4) à une hauteur (h₂) comprise entre 700 mm et 900 mm à partir du plan (PL') passant par l'extrémité du groin du porc et en fonction de la mesure verticale (H) du porc suspendu.

2. Procédé selon la revendication 1, caractérisé en ce qu'on dispose la pince (4) à hauteur convenable, de façon automatique en faisant intervenir une détection optique de la mesure (H) par une cellule (107) mobile verticalement parallèlement à la pince (4).

3. Procédé selon la revendication 1 ou 2, caractérisé en ce qu'on déplace, simultanément, la pince (4) et la cellule par l'intermédiaire d'organes moteurs dont l'alimentation est interrompue par la détection optique de la mesure (H) par la cellule (107).

4. Procédé selon la revendication 3, caractérisé en ce que la cellule (107) est animée d'une vitesse de descente proportionnellement supérieure à celle de descente de la pince.

5. Procédé selon la revendication 4, caractérisé en ce que la cellule (107) est animée d'une vitesse proportionnellement supérieure d'environ 16/9.

6. Procédé selon la revendication 2 ou 3, caractérisé en ce que l'appréciation de la détection optique de la mesure (H) est confiée à une cellule (107) mobile comportant une source émettrice apte à coopérer avec une surface réfléchissante (108) adaptée sur un support fixe disposé à l'opposé du porc suspendu par rapport à la source émettrice.

7. Procédé selon la revendication 2 ou 3, caractérisé en ce que l'appréciation de la détection optique de la mesure (H) est confiée à une cellule (107) mobile comportant une source émettrice apte à coopérer avec une batterie (111) de capteurs (112) optiques étagés verticalement sur un support situé à l'opposé de la cellule (107) par rapport au porc (P) suspendu.

8. Procédé selon l'une des revendications 1 à 7, caractérisé en ce que, après détection optique de la mesure (H), on immobilise le porc suspendu par sa partie inférieure.

9. Machine pour arracher les pannes d'un porc abattu et suspendu, du type comprenant une structure porteuse (13) déplaçable verticalement par un moteur (17) sur des glissières de support et de guidage (15) d'un bâti (16), un châssis (12) porté par la structure porteuse (13), déplaçable horizontalement par un moteur (14), et portant un pivot vertical (11) sur lequel est montée une pince (4) comportant deux mâchoires parallèles (5) se présentant sous la forme d'une tête de pénétration (6) apte à pouvoir être introduite entre les lèvres de l'ouverture thoracique d'un porc (P) suspendu pour en saisir et arracher les pannes (p) tapissant les faces internes des flancs du porc et un détecteur (7) d'un plan approximatif permettant de déterminer la base des pannes,

caractérisée en ce que le détecteur (7) est du type optique et comprend une cellule émettrice (107) montée sur la structure porteuse (13) et un ensemble optique récepteur (108) agencé de façon que le porc puisse être suspendu devant lui, de manière à apprécier la hauteur (H) du porc suspendu, entre un plan de référence (PL) passant par la palonnier (1) de suspension du porc et un plan (PL') passant par l'extrémité du groin porc, ledit détecteur (7) étant relié à une centrale d'asservissement (100), agencé de manière à arrêter le déplacement vertical de la structure porteuse (13) pour disposer la tête de pénétration (6) à une hauteur (h₂) comprise entre 700 mm et 900 mm au-dessus du plan (PL') passant par l'extrémité du groin dudit porc en fonction de la hauteur (H) du porc suspendu.

10. Machine selon a revendication 9, caractérisée en ce que : la cellule est une source optique émettrice (107) fixée sur un chariot (101) guidé en déplacement vertical relatif sur la structure (13) et entraîné, au moins pendant le mouvement descendant de la structure à partir d'une position de référence correspondant à un plan horizontal (PL) passant par le palonnier de suspension, à une vitesse de descente proportionnellement supérieure à celle de la structure, et l'ensemble optique récepteur (108) est porté par un montant (109) s'élevant à partir de la base du bâti (16) de la machine et devant lequel le porc est suspendu.

11. Machine selon la revendication 10, caractérisée en ce que le chariot (101) est animé d'une vitesse de descente proportionnellement supérieure d'environ 16/9 à celle de la structure (13).

12. Machine selon la revendication 9 ou 10, caractérisée en ce que l'ensemble optique récepteur est constitué par une surface réfléchissante (108).

13. Machine selon la revendication 9 ou 10, caractérisée en ce que l'ensemble optique récepteur est constitué par une batterie (111) de capteurs optiques (112) étagés verticalement.

14. Machine selon la revendication 9 ou 10, caractérisée en ce que le détecteur optique commande, après arrêt du chariot et de la structure, le fonctionnement d'une main (113) engageant et immobilisant la partie inférieure du porc contre un appui dorsal (10).

15. Machine selon la revendication 14, caractérisée en ce que le détecteur optique commande, préalablement au fonctionnement de la main, l'extension d'un appui dorsal mobile (117).

16. Machine selon la revendication 14 ou 15, caractérisée en ce que la main et l'appui dorsal sont montés sur le montant (109) portant l'ensemble optique récepteur.

17. Machine selon la revendication 10 ou 16, caractérisée en ce que le montant (109) est réglable en position verticale.

## Claims

1. Process for pulling off the belly strips from a hog, process consisting in suspending an eviscerated hog (P) carcass by means of a hooking bar (1) engaged in the Achilles tendon of the hog's hind legs, introducing in the open rib cage of the hog (P), a clamp (4) comprising jaws (5) with outwardly directed active members, placing the active jaws substantially inside the plane of the lower end portions of the belly strips (p) lining the inner faces of the hog's (P) sides (3), with a view to gripping said end portions and pulling them off, and then to raise the clamp (4) for pulling off the belly strips (p), process characterized in that, in order to define the plane of the lower end portions of the belly strips (p) it consists in : determining the vertical measurement (H) of the suspended hog between a horizontal plane (PL) traversing the hooking bar (1) engaged in the Achilles tendons, and a horizontal plane (PL') traversing the hog's snout end portion, placing the clamp (4) at a height ($h_2$) varying between 700 and 900 mm from the plane (PL') traversing the hog's snout end portion and as a function of the vertical measurement (H) of the suspended hog.

2. Process according to claim 1, characterized in that means are provided for automatically placing the clamp (4) at a suitable height, by using an optical detection of measurement (H) by a cell (107) moving vertically in parallel to the clamp (4).

3. Process according to claim 1 or 2, characterized in that means are provided for simultaneously moving the clamp (4) and the cell via driving members whose supply is interrupted by the optical detection by the cell (107) of measurement (H).

4. Process according to claim 3, characterized in that means are provided for moving the cell (107) downwardly at a speed proportionally higher than the downward moving speed of the clamp.

5. Process according to claim 4, characterized in that the speed of the cell (107) is proportionally higher by about 16/9.

6. Process according to claim 2 or 3, characterized in that means are provided for communicating the result of the optical detection of measurement (H) to a movable cell (107) comprising an emitting source capable of cooperating with a reflecting surface (108) adapted on a fixed support placed at the opposite side of the suspended hog with respect to the emitting source.

7. Process according to claim 2 or 3, characterized in that means are provided for communicating the result of the optical detection of measurement (H) to a movable cell (107) comprising an emitting source capable of cooperating with an array (111) of optical sensors (112) stepped vertically on a support situated in opposite relationship to the cell (107) with respect to the suspended hog (P).

8. Process according to one of claims 1 to 7, characterized in that means are provided for immobilizing the hog suspended by its lower part, following the optical detection of measurement (H).

9. Machine for pulling off the belly strips from a suspended hog carcass, of the type comprising a supporting structure (13) which can be moved vertically by a motor (17) over support and guide rails (15) mounted on a frame (16), a chassis (12) carried by the supporting structure (13) and which can be moved horizontally by a motor (14) and supports a vertical pivot (11), on which is mounted a clamp (4) equipped with two parallel jaws (5) which are in the form of a penetration head (6) capable of being introduced between the lips of the thoracic opening of a suspended hog (P) in order to grip and pull off the belly strips (p) lining the inner faces of the hog's sides, and a sensor (7) for sensing an approximate plane permitting the determination of the base of the belly strips,

machine characterized in that the sensor (7) is an optical type sensor and comprises an emitting cell (107) mounted on the supporting structure (13) and an optical receiving unit (108) arranged so that the hog may be suspended opposite said unit, in such a way as to assess the height (H) of the suspended hog, between a reference plane (PL) traversing the hooking bar (1) on which the hog is suspended and a plane (PL') traversing the hog's snout end portion, said sensor (7) being connected to a control power unit (100) arranged so as to stop the vertical movement of the supporting structure (13) in order to place the penetration head (6) at a height ($h_2$) varying between 700 mm and 900 mm above the plane (PL') traversing said hog's snout end portion, as a function of the height (H) of the suspended hog.

10. Machine according to claim 9, characterized in that the cell is an optical emitting source (107) fixed on a carriage (101) guided for relative vertical movement on the structure (13) and driven at least during the downward movement of the structure from a reference position corresponding to a horizontal plane (PL) traversing the suspension hooking bar, at a downward speed proportionally higher than that of the structure, and the optical receiving unit (108) is carried by an upright member (109) rising up from the base of the frame (16) of the machine, and in front of which the hog is suspended.

11. Machine according to claim 10, characterized in that the carriage (101) is moved downwardly at a speed which is proportionally higher by about 16/9 than that of the structure (13).

12. Machine according to claim 9 or 10, characterized in that the optical receiving unit is constituted by a reflecting surface (108).

13. Machine according to claim 9 or 10, characterized in that the optical receiving unit is constituted by an array (111) of vertically stepped optical sensors (112).

14. Machine according to claim 9 or 10, characterized in that the optical sensor controls, after the carriage and structure have stopped moving, the operation of a hand (113) which engages and immobilizes the lower part of the hog against a back support (10).

15. Machine according to claim 14, characterized in that the optical sensor controls, prior to the operation of the hand, the extension of a movable back support (117).

16. Machine according to claim 14 or 15, characterized in that the hand and back support are mounted on the upright member (109) supporting the optical receiving unit.

17. Machine according to claim 10 or 16, characterized in that the upright member (109) is adjustable in vertical position.

**Patentansprüche**

1. Verfahren zum Abtrennen von Fettstreifen eines Schweines, bestehend aus Aufhängen, durch eine Krantraverse (1), die in Eingriff steht mit den Achillessehnen der Hinterfüße eines Schweines (P), das geschlachtet und ausgenommen ist, Einführen in den offenen Brustkasten des Schweines (P) einer Zange (4), die Zahnklauen (5) mit aktiven Spannbacken aufweist, die nach außen gerichtet sind, Anordnen der aktiven Spannbacken im wesentlichen in die Ebene der unteren Enden der Fettstreifen (p), Schlagen auf die Innenseiten der Flanken (3) des Schweines (P), um diese Enden zu ergreifen und sie abzutrennen, sodann Heben der Zange (4), um die Fettstreifen (p) abzulösen, **dadurch gekennzeichnet**, daß, um die Ebene der unteren Enden der Fettstreifen (p) zu definieren, es besteht aus: Bestimmen der vertikalen Abmessung (H) des aufgehängten Schweines zwischen einer horizontalen Ebene (PL), die durch die Krantraverse (1) geht und in Eingriff ist mit den Achillessehnen und einer horizontalen Ebene (PL'), die durch das Ende des Rüssels des Schweines geht, Anordnen der Zange (4) auf einer Höhe ($h_2$) zwischen 700 mm und 900 mm, ausgehend von der Ebene (PL'), die durch das Ende des Rüssels des Schweines geht und in Abhängigkeit der vertikalen Abmessung (H) des aufgehängten Schweins.

2. Verfahren nach Anspruch 1, **dadurch gekennzeichnet**, daß die Zange (4) auf einer geeigneten Höhe auf automatische Weise angeordnet wird unter Einfügen einer optischen Erfassung des Wertes (H) durch eine vertikal parallel zur Zange (4) bewegbare Zelle (107).

3. Verfahren nach Anspruch 1 oder 2, **dadurch gekennzeichnet**, daß gleichzeitig die Zange (4) und die Zelle mittels Antriebsorganen bewegt wird, deren Speisung unterbrochen wird durch das optische Erfassen des Wertes (H) durch die Zelle (107).

4. Verfahren nach Anspruch 3, **dadurch gekennzeichnet**, daß die Zelle (107) mit einer Absenkgeschwindigkeit angetrieben wird, die proportional größer ist als jene des Absenkens der Zange.

5. Verfahren nach Anspruch 4, **dadurch gekennzeichnet**, daß die Zelle (107) mit einer Geschwindigkeit angetrieben wird, die proportional größer als ungefähr 16/9 ist.

6. Verfahren nach Anspruch 2 oder 3, **dadurch gekennzeichnet**, daß das Auftauchen des optischen Erfassens der Abmessung (H) einer bewegbaren Zelle (107) übertragen wird, die eine Emitterquelle aufweist, die geeignet ist, mit einer reflektierenden Fläche (108) zusammenzuwirken, die auf einem festen Träger aufgebracht ist, der gegenüber dem aufgehängten Schwein bezüglich der Emitterquelle angeordnet ist.

7. Verfahren nach Anspruch 2 oder 3, **dadurch gekennzeichnet**, daß das Auftauchen der optischen Erfassung der Abmessung (H) einer beweglichen Zelle (107) übertragen wird, die eine Emitterquelle aufweist, die geeignet ist, mit einer Batterie (111) von optischen Aufnehmern (112) zusammenzuwirken, die vertikal auf einem Träger geschichtet angeordnet sind, der gegenüber der Zelle (107) bezüglich des aufgehängten Schweins (P) angeordnet ist.

8. Verfahren nach einem der Ansprüche 1 bis 7, **dadurch gekennzeichnet**, daß nach optischer Erfassung des Meßwerts (H) das aufgehängte Schwein durch seinen unteren Bereich unbeweglich gemacht wird.

9. Maschine zum Abtrennen von Fettstreifen eines geschlachteten und aufgehängten Schweines von der Art mit einer Tragstruktur (13), die durch einen Motor (17) auf Träger und Führungsgleitstücken (15) eines Rahmens (16) vertikal bewegbar ist, einem Chassis (12), das durch die Tragstruktur (13) getragen wird, das horizontal durch einen Motor (14) bewegbar ist, und einen vertikalen Schwenkzappfen (11) aufweist, auf dem eine Zange (4) angeordnet ist, die zwei prallele Zahnklauen (5) aufweist, die in Form eines Eindringkopfes (6) augebildet sind, dazu geeignet, zwischen die Brustkorböffnungslippen eines Schweines (P) eingeführt zu werden, das zum Ergreifen und Abreißen von Fettstreifen (P) aufgehängt ist, die die inneren Seiten der Flanken des Schweines bedecken, und einem Detektor (7) einer ungefähren Ebene, die die Basis zu bestimmen ermöglicht,

**dadurch gekennzeichnet**, daß der Detektor (7) vom optischen Typ ist und eine Emitterzelle (107) aufweist, die auf der Tragstruktur (13) angeordnet ist und eine optische Aufnahmeanordnung (108) aufweist, die derart angelenkt ist, daß das Schwein vor ihr derart aufgehängt werden kann, daß die Höhe (H) des aufgehängten Schweins zwischen einer Referenzebene (PL), die durch die Krantraverse (1) zum Aufhängen des Schweines und einer Ebene (PL') verläuft, die durch das Ende des Rüssels des Schweins läuft, erfaßt werden kann, wobei der Detektor (7) verbunden ist mit einer Steuerzentrale (100), die derart ausgebildet ist, daß sie die vertikale Bewegung der Tragstruktur (13) anhält, um den Eindringkopf (6) auf einer Höhe ($h_2$) zwischen 700 mm und 900 mm oberhalb der Ebene (PL'), die durch das Ende des Rüssels des Schweines geht, in Abhängigkeit der Höhe (H) des aufgehängten Schweines anzuordnen.

10. Maschine nach Anspruch 9, **dadurch gekennzeichnet**, daß: die Zelle eine optische Emitterquelle (107) ist, die auf einem Schlitten (101) befestigt ist, der in relativer vertikaler Bewegung auf der Struktur (13) geführt ist und wenigstens während der Bewegung der Struktur nach unten angetrieben wird, ausgehend von einer Referenzstellung, entsprechend einer horizontalen Ebene (PL), die durch die Aufhängetraverse hindurchgeht, mit einer Absinkgeschwindigkeit, die proportional größer ist als jene der Struktur, und daß die optische Aufnahmeanordnung (108) von einer Stütze (109) getragen wird, die sich, ausgehend von der Basis des Rahmens (16) der Maschine, nach oben erstreckt, vor der das Schwein aufgehängt ist.

11. Maschine nach Anspruch 10, **dadurch gekennzeichnet**, daß der Schlitten (101) mit einer Absenkgeschwindigkeit angetrieben wird, die proportional größer, ungefähr 16/9, ist als jene der Struktur (13).

12. Maschine nach Anspruch 9 oder 10, **dadurch gekennzeichnet**, daß die optische Aufnahmeanordnung durch eine reflektierende Oberfläche (108) gebildet wird.

13. Maschine nach Anspruch 9 oder 10, **dadurch gekennzeichnet**, daß die optische Aufnahmeanordnung durch eine Ansammlung (111) von optischen Aufnehmern (112) gebildet wird, die vertikal übereinander gesetzt sind.

14. Maschine nach Anspruch 9 oder 10, **dadurch gekennzeichnet**, daß der optische Detektor nach dem Anhalten des Schlittens und der Tragestruktur den Betrieb einer Hand (113) steuert, die in den unteren Bereich des Schweines eingreift und ihn gegen einen Rückenanschlag (10) festlegt.

15. Maschine nach Anspruch 14, **dadurch gekennzeichnet**, daß der optische Detektor vor dem Betrieb der Hand das Ausfahren eines beweglichen Rückenanschlags (117) steuert.

16. Maschine nach Anspruch 14 oder 15, **dadurch gekennzeichnet**, daß die Hand und der Rückenanschlag auf der Stütze (109) angeordnet sind, die die optische Aufnahmeanordnung trägt.

17. Maschine nach Anspuch 10 oder 16, **dadurch gekennzeichnet**, daß die Stütze (109) in vertikaler Stellung einstellbar ist.

Fig_1

Fig_2

Fig. 3